# EUROPEAN PATENT APPLICATION

(11) **EP 3 905 165 A1**
(43) Date of publication of application: **03.11.2021**
(21) Application number: 18944745.1
(22) Date of filing: 27.12.2018
(51) Int. Cl.: G06Q 20/08

(54) **DATA PROCESSING METHOD AND APPARATUS FOR BLOCK CHAIN**

(71) Applicant: Hefei Dappworks Technology Co., Ltd., Hefei, Anhui 230031 (CN)
(72) Inventor: ZHANG, Yan, Hefei Anhui 230031 (CN); SHI, Yi, Hefei Anhui 230031 (CN); WANG, Antonio, Hefei Anhui 230031 (CN)
(74) Representative: Studio Torta S.p.A.
(86) International application number: PCT/CN2018/124368
(87) International publication number: WO 2020/133069

(57) **Abstract**

The present disclosure provides a method for processing data for a blockchain, the method is adapted to an unspent transaction output system of the blockchain and applied to a blockchain node, the method including: receiving (S201) first transaction data sent by a client, wherein the first transaction data includes transaction input data and transaction output data, wherein the transaction output data includes a category identification, a transaction amount, a recipient address and additional information, wherein the category identification is configured to indicate whether the first transaction data is associated with a smart contract, and the additional information is configured to indicate information required for operating the smart contract when the first transaction data is associated with the smart contract; and when the first transaction data is associated with the smart contract, storing (S202) the first transaction data into the blockchain via consensus verification with other blockchain nodes, and storing a corresponding smart contract status into a local database for each blockchain node based on the transaction output data. The present disclosure further provides an apparatus for processing data for a blockchain, a computer device and a computer readable storage medium.

## Description

### TECHNICAL FIELD

The present disclosure relates to a field of Internet technology, and more particularly, to a method and apparatus for processing data for a blockchain.

### BACKGROUND

Blockchain is a distributed accounting technology. Blockchain is decentralized, non-tampered, and is code-trusted without third-party trust guarantee, thereby attracting wide attention. Smart contract in blockchain technology further takes advantage of the code-trusted feature. In smart contract, contract terms are coded by using a computer language and the smart contract is stored in a blockchain. The smart contract may automatically implement corresponding contract terms, when a preset condition is triggered.

UTXO (unspent transaction output) is purposed by Satoshi Nakamoto. In an accounting system of bitcoin, a UTXO is used instead of an account or a balance. A balance of a user is calculated by summing all UTXOs owned by the user. Compared to an accounting system in an existing electronic banking system, the UTXO system of bitcoin is more similar to cash in daily lives. Each UTXO is like a banknote in a wallet. No account is in the UTXO system, so that the UTXO system is more decentralized than an accounting system and is more similar to usage of cash in reality.

However, existing smart contract systems (such as Ethereum and eos) are established based on accounting systems, which are not compatible with the UTXO system. Furthermore, the UTXO system is a stateless model, failing to store a status generated in an operation of the smart contract.

### SUMMARY

In view of this, the present disclosure provides a method and apparatus for processing data for a blockchain.

According to an aspect of the embodiments of the present disclosure, there is provided a method for processing data for a blockchain, the method is adapted to an unspent transaction output system of the blockchain and applied to a blockchain node, the method including: receiving first transaction data sent by a client, wherein the first transaction data includes transaction input data and transaction output data. The transaction output data includes: a category identification, a transaction amount, a recipient address and additional information, wherein the category identification is configured to indicate whether the first transaction data is associated with a smart contract, and the additional information is configured to indicate information required for operating the smart contract when the first transaction data is associated with the smart contract; when the first transaction data is associated with the smart contract, storing the first transaction data into the blockchain via consensus verification with other blockchain nodes, and storing a corresponding smart contract status into a local database for each blockchain node based on the transaction output data.

According to some embodiments of the present disclosure, when the first transaction data is transaction data for issuing the smart contract, the category identification indicates that the first transaction data is associated with the smart contract, the transaction amount is a first value greater than zero, the recipient address is an address of the smart contract, and the additional information includes codes of the smart contract. Storing the first transaction data into the blockchain via consensus verification with other blockchain nodes, and storing the corresponding smart contract status into the local database for said each blockchain node based on the transaction output data includes: packaging the first transaction data into a new block and sending the new block to other blockchain nodes, so that when adding the new block into the blockchain via consensus verification, said each blockchain node initializes the smart contract based on the additional information and stores an initialized status into the local database for said each blockchain node.

According to some embodiments of the present disclosure, the method further including: constructing initial changing data after initializing the smart contract based on the additional information, wherein transaction input data of the initial changing data is the transaction input data of the first transaction data, a recipient address of transaction output data of the initial changing data is an address of the client, and a transaction amount of the transaction output data of the initial changing data is an initial changing value, wherein the initial changing value equals to actual transaction amount of the transaction input data minus the first value; and sending the initial changing data to other blockchain nodes, so that said each blockchain node stores the initial changing data into the blockchain via consensus verification.

According to some embodiments of the present disclosure, when the first transaction data is transaction data for triggering the smart contract, the category identification indicates that the first transaction data is associated with the smart contract, the transaction amount is a second value, the recipient address is an address of the smart contract, and the additional information includes an executing instruction for the smart contract; and storing the first transaction data into the blockchain via consensus verification with other blockchain nodes, and storing the corresponding smart contract status into the local database for said each blockchain node based on the transaction output data includes: packaging the first transaction data into a new block and sending the new block to other blockchain nodes, so that when adding the new block into the blockchain via consensus verification, said each blockchain node operates the smart contract based on the additional information and stores an operated status into the local database for said each blockchain node.

According to some embodiments of the present disclosure, the method further including: constructing second transaction data after operating the smart contract based on the additional information, wherein the second transaction data includes transaction input data and transaction output data, wherein the transaction input data of the second transaction data is the transaction output data of the first transaction data, and the second transaction data includes first transaction output data, wherein a recipient address of the first transaction output data is an address of the node, and a transaction amount of the first transaction output data is a third value; and sending the second transaction data to other blockchain nodes, so that said each blockchain node stores the second transaction data into the blockchain via consensus verification.

According to some embodiments of the present disclosure, the second transaction data further includes second transaction output data, wherein a recipient address of the second transaction output data is an address indicated by a result of operating the smart contract, and a transaction amount of the second transaction output data is a fourth value, wherein the fourth value represents an amount indicated by the result of operating the smart contract.

According to some embodiments of the present disclosure, the second transaction data further includes third transaction output data, wherein a recipient address of the third transaction output data is an address of the client, and a transaction amount of the third transaction output data is a fifth value, wherein the fifth value equals to the second value minus the third value and the fourth value.

According to some embodiments of the present disclosure, initializing the smart contract based on the additional information includes: initializing the smart contract by using a virtual machine based on codes of the smart contract; and/or operating the smart contract based on the additional information includes: operating the smart contract by using the virtual machine based on the executing instruction for the smart contract.

According to some embodiments of the present disclosure, the category identification and the recipient address occupy a same area in a data structure for the transaction output data; or the category identification and the recipient address occupy different areas in the data structure for the transaction output data.

According to another aspect of the embodiments of the present disclosure, there is provided an apparatus for processing data for a blockchain, the apparatus is adapted to an unspent transaction output system of the blockchain and applied to a blockchain node, the apparatus including: a receiving module and a managing module. The receiving module is configured to receive first transaction data sent by a client, wherein the first transaction data includes transaction input data and transaction output data. The transaction output data includes: a category identification, a transaction amount, a recipient address and additional information, wherein the category identification is configured to indicate whether the first transaction data is associated with a smart contract, and the additional information is configured to indicate information required for operating the smart contract when the first transaction data is associated with the smart contract. The managing module is configured to when the first transaction data is associated with the smart contract, store the first transaction data into the blockchain via consensus verification with other blockchain nodes, and store a corresponding smart contract status into a local database for each blockchain node based on the transaction output data.

According to some embodiments of the present disclosure, when the first transaction data is transaction data for issuing the smart contract, the category identification indicates that the first transaction data is associated with the smart contract, the transaction amount is a first value greater than zero, the recipient address is an address of the smart contract, and the additional information includes codes of the smart contract. The managing module is configured to store the first transaction data into the blockchain via consensus verification with other blockchain nodes, and store the corresponding smart contract status into the local database for said each blockchain node based on the transaction output data by: packaging the first transaction data into a new block and sending the new block to other blockchain nodes, so that when adding the new block into the blockchain via consensus verification, said each blockchain node initializes the smart contract based on the additional information and stores an initialized status into the local database for said each blockchain node.

According to some embodiments of the present disclosure, the apparatus further including an initial changing module, configured to construct initial changing data after initializing the smart contract based on the additional information, wherein transaction input data of the initial changing data is the transaction input data of the first transaction data, a recipient address of transaction output data of the initial changing data is an address of the client, and a transaction amount of the transaction output data of the initial changing data is an initial changing value, wherein the initial changing value equals to actual transaction amount of the transaction input data minus the first value; and send the initial changing data to other blockchain nodes, so that said each blockchain node stores the initial changing data into the blockchain via consensus verification.

According to some embodiments of the present disclosure, when the first transaction data is transaction data for triggering the smart contract, the category identification indicates that the first transaction data is associated with the smart contract, the transaction amount is a second value, the recipient address is an address of the smart contract, and the additional information includes an executing instruction for the smart contract. The managing module is configured to store the first transaction data into the blockchain via consensus verification with other blockchain nodes, and store the corresponding smart contract status into the local database for said each blockchain node based on the transaction output data by: packaging the first transaction data into a new block and sending the new block to other blockchain nodes, so that when adding the new block into the blockchain via consensus verification, said each blockchain node operates the smart contract based on the additional information and stores an operated status into the local database for said each blockchain node.

According to some embodiments of the present disclosure, the apparatus further including an auxiliary managing module configured to construct second transaction data after operating the smart contract based on the additional information, wherein the second transaction data includes transaction input data and transaction output data, wherein the transaction input data of the second transaction data is the transaction output data of the first transaction data, and the second transaction data includes first transaction output data, wherein a recipient address of the first transaction output data is an address of the node, and a transaction amount of the first transaction output data is a third value; and send the second transaction data to other blockchain nodes, so that said each blockchain node stores the second transaction data into the blockchain via consensus verification.

According to some embodiments of the present disclosure, the second transaction data further includes second transaction output data, wherein a recipient address of the second transaction output data is an address indicated by a result of operating the smart contract, and a transaction amount of the second transaction output data is a fourth value, wherein the fourth value represents an amount indicated by the result of operating the smart contract.

According to some embodiments of the present disclosure, the second transaction data further includes third transaction output data, wherein a recipient address of the third transaction output data is an address of the client, and a transaction amount of the third transaction output data is a fifth value, wherein the fifth value equals to the second value minus the third value and the fourth value.

According to some embodiments of the present disclosure, the managing module is configured to initialize the smart contract based on the additional information by: initializing the smart contract by using a virtual machine based on codes of the smart contract; and/or the managing module is configured to operate the smart contract based on the additional information by: operating the smart contract by using the virtual machine based on the executing instruction for the smart contract.

According to some embodiments of the present disclosure, the managing module initializing the smart contract based on the additional information includes: the category identification and the recipient address occupy a same area in a data structure for the transaction output data; or the category identification and the recipient address occupy different areas in the data structure for the transaction output data.

According to another aspect of the embodiments of the present disclosure, there is provided a computer device, including a memory, a processor, and computer programs stored on the memory and capable of running on the processor, and the processor, when executing the programs, implements the method described above.

According to another aspect of the embodiments of the present disclosure, there is provided a computer readable storage medium having executable instructions stored thereon, and the instructions, when executed by a processor, cause the processor to implement the method described above.

According to another aspect of the embodiments of the present disclosure, there is provided a computer program including executable instructions, the instructions, when executed by a processor, cause the processor to implement the method described above.

According to the embodiments of the present disclosure, it is possible to at least partially solve/mitigate/inhibit/even avoid the problem that a smart contract may not be supported by an existing UTXO system. A category identification and additional information are included in transaction output data of first transaction data, by improving a data structure for the UTXO system. The category identification is used for indicating whether the first transaction data is associated with a smart contract, and the additional information is used for indicating information required for operating the smart contract. Therefore, the UTXO system may adapt to transaction data related to a smart contract, locally record a smart contract status corresponding to the first transaction data stored in the blockchain, and support smart contracts having various levels of complexity.

### BRIEF DESCRIPTION OF THE ACCOMPANYING DRAWINGS

The above and additional objectives, features and advantages of the present disclosure will become more obvious from the following description of the embodiments in conjunction with the accompanying drawings, in which:
Fig. 1 schematically shows an exemplary system architecture of a method and apparatus for processing data for a blockchain according to some embodiments of the present disclosure;
Fig. 2 schematically shows a flowchart of a method for processing data for a blockchain according to some embodiments of the present disclosure;
Fig. 3A schematically shows data structures of transaction output data of first transaction data according to some embodiments of the present disclosure;
Fig. 3B schematically shows data structures of transaction input data of second transaction data and transaction output data of second transaction data according to some embodiments of the present disclosure;
Fig. 4 schematically shows a block diagram of an apparatus for processing data for a blockchain according to some embodiments of the present disclosure;
Fig. 5 schematically shows a block diagram of an apparatus for processing data for a blockchain according to some embodiments of the present disclosure; and
Fig. 6 schematically shows a block diagram of a computer device suitable for implementing the above-mentioned method according to some embodiments of the present disclosure.

### DETAILED DESCRIPTION

Embodiments of the present disclosure will be described with reference to the drawings below. However, it should be understood that the description is only exemplary and not intended to limit the scope of the present disclosure. In the following detailed description, for ease of explanation, many specific details are set forth to propose a comprehensive understanding of the embodiments of the present disclosure. However, obviously, one or more embodiments may further be implemented without these specific details. In addition, in the following description, descriptions of well-known structures and technologies are omitted to avoid unnecessarily obscuring the concept of the present disclosure.

The terms used herein are only for describing specific embodiments, and are not intended to limit the present disclosure. The terms "comprising", "including", etc. used herein indicate the existence of the described features, steps, operations and/or components, but do not exclude the presence or addition of one or more other features, steps, operations or components.

All terms used herein (including technical and scientific terms) have meanings commonly understood by those skilled in the art, unless otherwise defined. It should be noted that the terms used herein should be interpreted as having meanings consistent with the context of this description, and should not be explained in an idealized or overly rigid manner.

In the case of using an expression similar to "at least one of A, B, C, etc.", it should be generally interpreted according to the meaning of the expression commonly understood by those skilled in the art (for example, "a system with at least one of A, B and C" should include but is not limited to systems with A alone, B alone, C alone, A and B, A and C, B and C, and/or a system with A, B, C, etc.). In the case of using an expression similar to "at least one of A, B, or C, etc.", it should be generally interpreted according to the meaning of the expression commonly understood by those skilled in the art (for example, "a system with at least one of A, B or C" should include but is not limited to systems with A alone, B alone, C alone, A and B, A and C, B and C, and/or a system with A, B, C, etc.). Those skilled in the art should further understand that essentially any transitional conjunctions and/or phrases representing two or more optional items, whether in the description, claims or drawings, should be understood to include the possibilities of one of these items, any of these items, or two items. For example, the phrase "A or B" should be understood to include the possibilities of "A" or "B", or "A and B."

According to the embodiments of the present disclosure, there is provided a method and apparatus for processing data for a blockchain. The method is adapted to an unspent transaction output (UTXO) system of a blockchain. The method is applied to a blockchain node, including a transaction data receiving process and a transaction data managing process. In the transaction data receiving process, first transaction data is received, and the first transaction data includes transaction input data and transaction output data. In addition to a transaction amount and a recipient address, the transaction output data further includes a category identification and additional information. The category identification is configured to indicate whether the first transaction data is associated with a smart contract. The additional information is configured to indicate information required for operating the smart contract. Then in the transaction data managing process, the first transaction data is stored into the blockchain via consensus verification with other blockchain nodes, and a corresponding smart contract status is stored into a local database for each blockchain node based on the transaction output data.

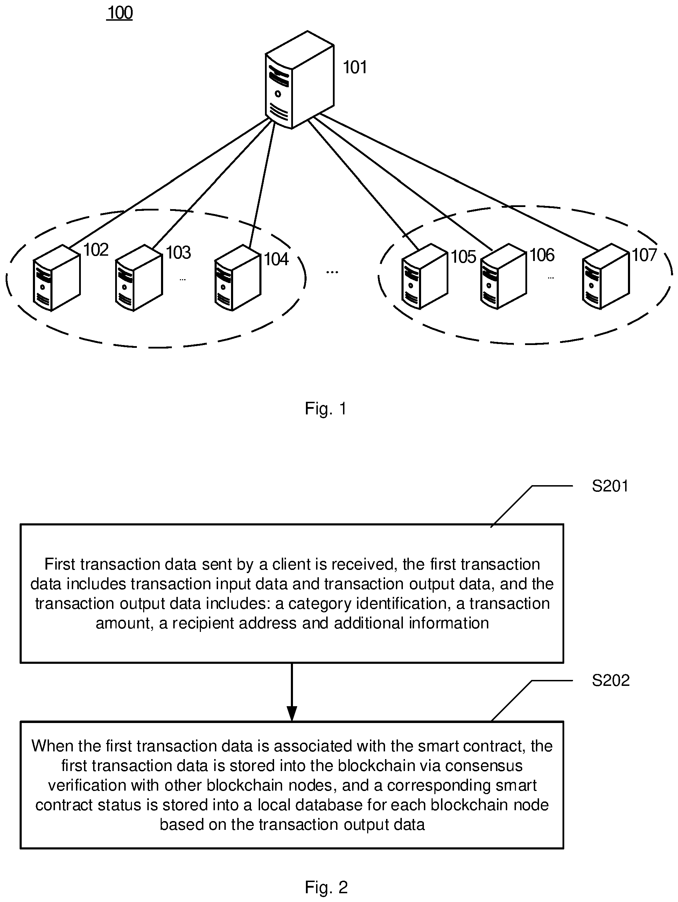

Fig. 1 schematically shows an exemplary system architecture 100 of a method and apparatus for processing data for a blockchain according to some embodiments of the present disclosure. It should be noted that Fig. 1 is only an example of a system architecture to which the embodiments of the present disclosure may be applied, so as to help those skilled in the art understand the technical content of the present disclosure. However, it does not mean that the embodiments of the present disclosure cannot be used for other apparatuses, systems, environments or scenarios.

As shown in Fig. 1, the system architecture 100 according to the embodiments may include a plurality of electronic devices (101-107). The electronic device (101-107) may be a personal computer (PC), a network server, a database server, etc. Each of the electronic devices (101-107) may have a same computing capability or different computing capabilities.

As an embodiment, the plurality of electronic devices may communicate with each other to construct a blockchain network. Each electronic device serves as a blockchain node in the blockchain network, and each blockchain node maintains a same blockchain database (hereinafter collectively called "blockchain"). In addition, in the system architecture 100, each blockchain node may communicate with different service providers and/or client computing devices (such as servers/server clusters, terminal devices, etc.) respectively. That is, each blockchain node may serve as a corresponding blockchain node for a service provider and/or a client respectively, and each service provider and/or client may implement operations such as reading and writing data in the blockchain via the corresponding blockchain node.

It should be understood that the number of electronic devices in Fig. 1 is merely illustrative. There may be any number of electronic devices as desired.

The method for processing data for a blockchain according to the embodiments of the present disclosure may be implemented in the electronic device shown in Fig. 1.

Fig. 2 schematically shows a flowchart of a method for processing data for a blockchain according to some embodiments of the present disclosure.

As shown in Figure 2, the method is adapted to an unspent transaction output (UTXO) system of the blockchain. The method is applied to a blockchain node, and the data processing operations for the blockchain provided by the present disclosure is described from a side of a blockchain node. The method includes operations S201 and S202.

In operation S201, first transaction data sent by a client is received, the first transaction data includes transaction input data and transaction output data, and the transaction output data includes: a category identification, a transaction amount, a recipient address and additional information.

It should be noted that the UTXO system is an accounting model of a blockchain network. In the UTXO system, an output of a previous transaction may be spent in each transaction and then a new output may be generated. The generated output may be spent in a transaction in the future. All unspent transactions are stored in each fully synchronized node. A list of unspent transactions associated with all addresses of a user is tracked by a wallet of the user, and a balance of the wallet is calculated as a sum of the unspent transactions.

In operation S201, the first transaction data has a data structure for the UTXO system, including transaction input data and transaction output data. The transaction input data includes an actual transaction amount sent by a client. In addition to a transaction amount and a recipient address required in a data structure for the existing UTXO system, the transaction output data further includes a category identification and additional information. The category identification is configured to indicate whether the first transaction data is associated with a smart contract, and the additional information is configured to indicate information required for operating the smart contract when the first transaction data is associated with the smart contract.

Then, in operation S202, when the first transaction data is associated with the smart contract, the first transaction data is stored into the blockchain via consensus verification with other blockchain nodes, and a corresponding smart contract status is stored into a local database for each blockchain node based on the transaction output data.

In operation S202, when the category identification of the transaction data of the first transaction data indicates that the first transaction data is associated with the smart contract, on the one hand, the first transaction data is stored into the blockchain via consensus verification of each blockchain node. On the other hand, a corresponding smart contract status is stored into a local database for each blockchain node based on the transaction output data.

It may be noted that the data structure for the UTXO system may be improved according to the method shown in Fig. 2. A category identification and additional information are included in transaction output data of first transaction data, by improving a data structure for the UTXO system. The category identification is used for indicating whether the first transaction data is associated with a smart contract, and the additional information is used for indicating information required for operating the smart contract. Therefore, the UTXO system may adapt to transaction data related to a smart contract, locally record a smart contract status corresponding to the first transaction data stored in the blockchain, and support smart contracts having various levels of complexity. Therefore, it is possible to avoid the problem that a smart contract may not be supported by an existing UTXO system.

According to some embodiments of the present disclosure, in an improved data structure for the UTXO system, the category identification and the recipient address occupy a same area in a data structure for the transaction output data; or the category identification and the recipient address occupy different areas in the data structure for the transaction output data. The category identification and the recipient address may be configured as desired and is not limited herein.

According to some embodiments of the present disclosure, the first transaction data is transaction data for issuing the smart contract, the category identification in the transaction output data of the first transaction data indicates that the first transaction data is associated with the smart contract, the transaction amount in the transaction output data of the first transaction data is a first value greater than zero, the recipient address in the transaction output data of the first transaction data is an address of the smart contract, and the additional information in the transaction output data of the first transaction data includes codes of the smart contract associated with the first transaction data, i.e., codes of the smart contract to be issued.

Storing the first transaction data into the blockchain via consensus verification with other blockchain nodes, and storing the corresponding smart contract status into the local database for said each blockchain node based on the transaction output data in the operation S202 includes the following operations. For a block-producing node, the first transaction data is packaged into a new block and the new block is sent to other blockchain nodes, so that when adding the new block into the blockchain via consensus verification, said each blockchain node initializes the smart contract based on the additional information in the transaction output data of the first transaction data and stores an initialized status into the local database for said each blockchain node. For a node which is not a block-producing node, a new block sent by a block-producing node is received, the first transaction data is packaged in the new block, so that when adding the new block into the blockchain via consensus verification with other blockchain nodes, said each blockchain node initializes the smart contract based on the additional information in the transaction output data of the first transaction data and stores an initialized status into the local database for said each blockchain node.

According to the embodiments, when a client is issuing a smart contract, first transaction data including transaction output data is constructed. A category identification of the transaction output data indicates that the first transaction data is associated with the smart contract association. The smart contract is a recipient of the transaction, and an address of the smart contract is record in a recipient address of the transaction output data. Codes of the smart contract are recorded in additional information of the transaction output data. A first value greater than zero is recorded in a transaction amount of the transaction output data. The first transaction data is sent to a blockchain node by the client. When packaging the first transaction data into a new block, a block-producing node initializes the corresponding smart contract and stores an initialized status into a local database. Other full nodes may synchronize the blockchain. When receiving the new block packaged by the block-producing node, said other full nodes may further initialize the smart contract in a block verification phase and an initialized status may be stored into a respective local database for each node. On the one hand, codes of the smart contract are deployed into the blockchain, so as to ensure that the smart contract may implement operations accurately and accurately according to a pre-determined rule based on non-tamperability of the blockchain. On the other hand, the initialized status of the smart contract is recorded locally in the blockchain node, so that changing status of the smart contract may be recorded instead of the existing account/balance system. Therefore, transmission bandwidth and storage of a blockchain may be saved.

Optionally, initializing the smart contract based on the additional information includes: initializing the smart contract by using a virtual machine based on codes of the smart contract.

In the UTXO system, an input of transaction data is an output of a previous transaction unspent in the account. The input of the transaction data is fixed and non-tampered like banknotes in a wallet. Therefore, as an optional embodiment, after the first transaction data is sent by the client, it is common that a transaction amount of the transaction input is different from a transaction amount of the transaction output. If the transaction amount in the transaction output data of the first transaction data is different from the actual transaction data in the transaction input data, initial changing data needs to be constructed for changing. Specifically, the method shown in Fig. 2 further includes the following operations. Initial changing data is constructed after initializing the smart contract based on the additional information. Transaction input data of the initial changing data is the transaction input data of the first transaction data. The transaction input data of the first transaction data includes the transaction amount of the first transaction data sent by the client (also called an actual transaction amount). A recipient address of transaction output data of the initial changing data is an address of the client sending the first transaction data. A transaction amount of the transaction output data of the initial changing data is an initial changing value. The initial changing value equals to the actual transaction amount sent by the client minus the first value. According to the embodiments, when issuing a smart contract, the transaction amount may be refunded for an overpayment or supplementally paid for a deficiency. The initial changing data is sent to other blockchain nodes, so that said each blockchain node stores the initial changing data into the blockchain via consensus verification. Therefore, the initial changing event may be recorded in the blockchain.

According to some embodiments of the present disclosure, after the smart contract is deployed in the blockchain according to the above embodiments, a triggering execution process of the smart contract may further be implemented. In this case, the first transaction data is transaction data for triggering the smart contract. The category identification in the transaction output data of the first transaction data indicates that the first transaction data is associated with the smart contract. The transaction amount in the transaction output data of the first transaction data is a second value. The recipient address in the transaction output data of the first transaction data is an address of the smart contract. The additional information in the transaction output data of the first transaction data includes an executing instruction for the smart contract.

Storing the first transaction data into the blockchain via consensus verification with other blockchain nodes, and storing the corresponding smart contract status into the local database for said each blockchain node based on the transaction output data in the operation S202 includes the following operations. For a block-producing node, the first transaction data is packaged into a new block and the new block is sent to other blockchain nodes, so that when adding the new block into the blockchain via consensus verification, said each blockchain node operates the smart contract based on the additional information and stores an operated status into the local database for said each blockchain node. For a node which is not a block-producing node, a new block sent by a block-producing node is received, the first transaction data is packaged in the new block, so that when adding the new block into the blockchain via consensus verification with other blockchain nodes, said each blockchain node operates the smart contract based on the additional information in the transaction output data of the first transaction data and stores an operated status into the local database for said each blockchain node.

According to the embodiments, when a client is issuing an instruction to a smart contract deployed in a blockchain, first transaction data including transaction output data is constructed. A category identification of the transaction output data indicates that the first transaction data is associated with the smart contract association. The smart contract is a recipient of the transaction, and an address of the smart contract is record in a recipient address of the transaction output data. An executing instruction for the smart contract is recorded in additional information of the transaction output data. A second value for operating the smart contract is recorded in a transaction amount of the transaction output data. The first transaction data is sent to a blockchain node by the client. When packaging the first transaction data into a new block, a block-producing node operates the smart contract and stores an operated status into a local database. Other full nodes may synchronize the blockchain. When receiving the new block packaged by the block-producing node, said other full nodes may further operate the smart contract in a block verification phase and an operated status may be stored into a respective local database for each node. The operated status of the smart contract is recorded locally in the blockchain node, which is possible to support a Turing-complete smart contract. Thus, status of the smart contract may be recorded instead of the existing account/balance system, and transmission bandwidth and storage of a blockchain may be saved.

Optionally, operating the smart contract based on the additional information includes: operating the smart contract by using a virtual machine based on the executing instruction for the smart contract.

In the UTXO system, an input of transaction data is an output of a previous transaction unspent in the account. The input of the transaction data is fixed and non-tampered like banknotes in a wallet. Therefore, as an optional embodiment, after the first transaction data is sent by the client, it is common that a transaction amount of the transaction input is different from a transaction amount of the transaction output. If the transaction amount in the transaction output data of the first transaction data is different from the actual transaction data in the transaction input data, initial changing data needs to be constructed for changing. Specifically, the method shown in Fig. 2 further includes the following operations. Initial changing data is constructed after operating the smart contract based on the additional information. Transaction input data of the initial changing data is the transaction input data of the first transaction data. The transaction input data of the first transaction data includes the transaction amount of the first transaction data sent by the client (also called an actual transaction amount). A recipient address of transaction output data of the initial changing data is an address of the client sending the first transaction data. A transaction amount of the transaction output data of the initial changing data is an initial changing value. The initial changing value equals to the actual transaction amount sent by the client minus the second value. According to the embodiments, when triggering execution of a smart contract, the transaction amount may be refunded for an overpayment or supplementally paid for a deficiency. The initial changing data is sent to other blockchain nodes, so that said each blockchain node stores the initial changing data into the blockchain via consensus verification. Therefore, the initial changing event may be recorded in the blockchain.

As an optional embodiment, the method shown in Fig. 2 further includes the following operations. Second transaction data is constructed after operating the smart contract based on the additional information. The second transaction data includes transaction input data and transaction output data. The transaction input data of the second transaction data is the transaction output data of the first transaction data. The transaction output data of the second transaction data includes first transaction output data. For a block-producing node, a recipient address of the first transaction output data is an address of the node. For a non-block-producing node, a recipient address of the first transaction output data is an address of the block-producing node. A transaction amount of the first transaction output data is a third value. The second transaction data is sent to other blockchain nodes, so that said each blockchain node stores the second transaction data into the blockchain via consensus verification.

It may be noted that the first transaction output data of the second transaction data indicates a handling charge paid to the block-producing node operating the smart contract, in order to incentivize the block-producing node. In this way, the transaction management based on the UTXO system may be operated smoothly and orderly.

In some embodiments of the present disclosure, in addition to the output data indicating the handling charge paid to the block-producing node, the second transaction data may further include second transaction output data. A recipient address of the second transaction output data is an address indicated by a result of operating the smart contract. A transaction amount of the second transaction output data is a fourth value. The fourth value represents an amount indicated by the result of operating the smart contract.

It may be noted that the second transaction output data of the second transaction data represents an address indicated by the result of operating the smart contract according to the smart contract instruction. For example, ,a part of the transaction amount may be stored in the smart contract, or a part of the transaction amount may be sent to an address of other clients indicated by the result of executing the instruction etc., depending on the content pre-determined by the smart contract and is not limited here, as long as it meets the requirements for the client sending the first transaction data to operate the smart contract.

In some embodiments of the present disclosure, in addition to the handling charge paid to the block-producing node and the cost required for operating the smart contract, the second transaction data may further include third transaction output data. A recipient address of the third transaction output data is an address of the client. A transaction amount of the third transaction output data is a fifth value. The fifth value equals to the second value minus the third value and the fourth value.

It may be noted that the third transaction output data of the second transaction data indicates that transaction output corresponding to changing to the client is generated after operating the smart contract. If the transaction amount of the first transaction data sent by the client is greater than the cost required for operating the smart contract, the client will be changed. In this way, the transaction may be operated fairly.

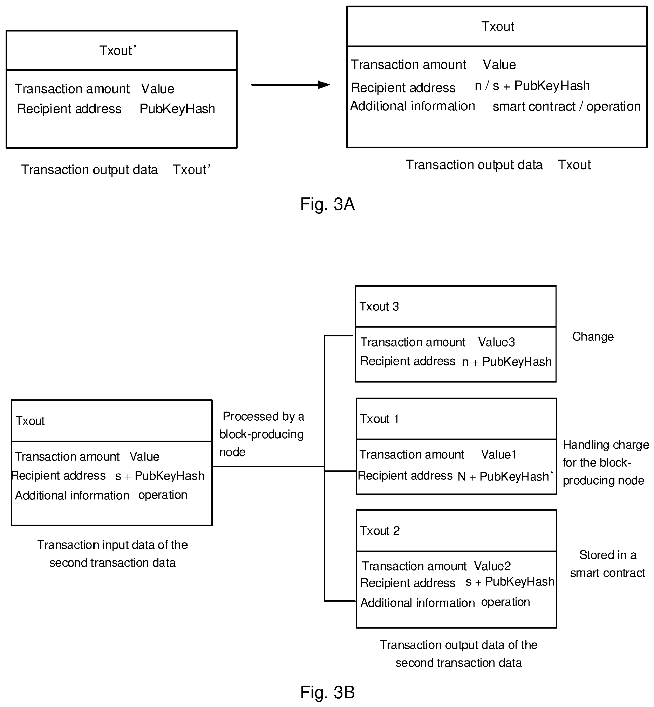

The method shown in Fig. 2 may be further described with reference to Fig. 3A to Fig. 3B in combination with specific embodiments.

Fig. 3A schematically shows data structures of transaction output data of first transaction data according to some embodiments of the present disclosure.

As shown in Fig. 3A, the transaction output data of the first transaction data adopts a data structure for the improved UTXO system. The left data structure is a data structure for the existing UTXO system, representing transaction output data (Txout'). The right data structure represents transaction output data (Txout) of the first transaction data according to the present disclosure.

It may be noted that in the existing data structure for the transaction output data Txout' of a bitcoin blockchain, PublicKeyHash is used to indicate a recipient address, and Value is used to indicate a transaction amount. While in the improved data structure for the transaction output data Txout of the first transaction data according to the present disclosure, the data format of the original PublicKeyHash is modified. If the first transaction data is not associated with a smart contract, a prefix n is added in front of the data, indicating that the recipient address is an ordinary address. If the first transaction data is associated with a smart contract, a prefix s is added in front of the data, indicating that the recipient address is an address of a smart contract. The prefix n/s is a category identification indicating whether the first transaction data is associated with the smart contract. In the data structure for Txout, a smart contract/operation is added, representing additional information for storing codes of the smart contract or an executing instruction for the smart contract issued by the client.

Based on the improved Txout data structure as described above, the first transaction data in the embodiments of the present disclosure may be transaction data supporting storage and identification of a smart contract.

When a smart contract A is issued by a client, first transaction data is constructed. The first transaction data includes transaction input data and transaction output data. The transaction input data includes actual transaction amount sent by the client. The transaction output data Txout includes: a transaction amount (Value), a recipient address (n/s + PubKeyHash) and additional information (smart contract/operation). The transaction amount is 0.0001. The recipient address is a string beginning with an s, indicating that the address is an address of a smart contract. Codes of the smart contract A is included in the additional information.

The first transaction data is sent to a blockchain node by the client. When packaging the first transaction data into a block, the block-producing node may operate the smart contract A by using a virtual machine, and may store an initialized status in a computer database for the block-producing node. Other full nodes may synchronize the blockchain. When receiving the block, said other full nodes may further operate the smart contract A in a block verification phase and store an initialized status in a computer database for each of said other full nodes.

In addition, if the actual transaction amount in the transaction input data of the first transaction data is greater than the transaction amount in the transaction input data, an initial changing data is further constructed and generated. A recipient address of the initial changing data is an address of the client sending the first transaction data. A transaction amount of the initial changing data equals to actual transaction amount minus 0.0001.

Further, when an executing instruction is sent to the smart contract A by the client, first transaction data is constructed. The first transaction data includes transaction input data and transaction output data. The transaction input data includes actual transaction amount sent by the client. The transaction output data Txout includes: a transaction amount (Value), a recipient address (n/s + PubKeyHash) and additional information (smart contract/operation). The transaction amount is a transaction amount required for operating the smart contract A. The recipient address includes an address of the smart contract A to be operated (s + PubKeyHash). An instruction to be executed (operation) is included in the additional information (smart contract/operation).

The first transaction data is sent to the blockchain node by the client. When packaging the transaction into a block, a block-producing node executes the executing instruction by using a corresponding smart contract A and updates a status of a locally stored smart contract A. Other full nodes synchronize the blockchain. When receiving the block, said other full nodes may further execute the smart contract instruction in a block verification phase and update a status of a locally stored smart contract A.

In addition, if the actual transaction amount in the transaction input data of the first transaction data is greater than the transaction amount in the transaction input data, an initial changing data is further constructed and generated. A recipient address of the initial changing data is an address of the client sending the first transaction data. A transaction amount of the initial changing data equals to actual transaction amount minus the transaction amount (Value).

Fig. 3B schematically shows data structures of transaction input data of second transaction data and transaction output data of second transaction data according to some embodiments of the present disclosure.

As shown in Fig. 3B, after operating the smart contract based on the additional information, second transaction data is constructed. The second transaction data includes transaction input data and transaction output data. The transaction input data of the second transaction data is the transaction output data Txout of the first transaction data shown on the right side of Fig. 3A. The transaction output data of the second transaction data includes a first transaction output data Txout1, a second transaction output data Txout2, and a third transaction output data Txout3.

A recipient address n + PubKeyHash of the first transaction output data Txout1 is an address of the block-producing node, and a transaction amount Value1 represents the handling charge paid to the block-producing node.

A recipient address s + PubKeyHash of the second transaction output data Txout2 is an address of the smart contract A, and a transaction amount Value2 represents the transaction amount stored in the smart contract.

A recipient address n + PubKeyHash of the third transaction output data Txout3 is the address of the client, a transaction amount Value3 represents the changing amount to the client, and Value3 = Value - Value1 - Value2.

It may be noted that after operating the smart contract A, Txout is split into three payments by the block-producing node. The first payment is a fee charged for operating the smart contract A, such that the first payment belongs to the block-producing node. The second payment is processed according to the executing instruction for the smart contract. The second payment is stored in the smart contract or sent to the address of the result of executing the instruction. The third payment is an excess amount, which will be returned to the client.

Based on the above analysis, it may be seen that the embodiments of the present disclosure have the following beneficial effects. A Turing-complete smart contract may be realized in a UTXO system. Besides, it is not required to record the status of the smart contract in a blockchain, thereby saving transmission bandwidth and storage of a blockchain.

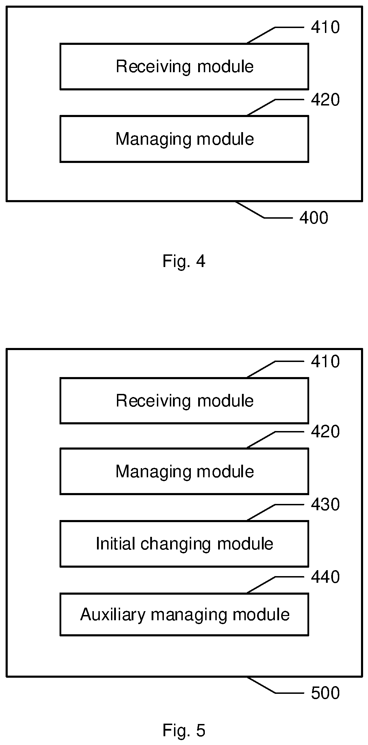

Fig. 4 schematically shows a block diagram of an apparatus for processing data for a blockchain according to some embodiments of the present disclosure.

As shown in Fig. 4, the apparatus 400 for processing data for a blockchain is adapted to an unspent transaction output system of the blockchain and applied to a blockchain node. The apparatus 400 includes a receiving module 410 and a managing module 420.

The receiving module 410 is configured to receive first transaction data sent by a client. The first transaction data includes transaction input data and transaction output data. The transaction output data includes a category identification, a transaction amount, a recipient address and additional information. The category identification is configured to indicate whether the first transaction data is associated with a smart contract. The additional information is configured to indicate information required for operating the smart contract when the first transaction data is associated with the smart contract.

The managing module 420 is configured to when the first transaction data is associated with the smart contract, store the first transaction data into the blockchain via consensus verification with other blockchain nodes, and store a corresponding smart contract status into a local database for each blockchain node based on the transaction output data.

Optionally, the category identification and the recipient address occupy a same area in a data structure for the transaction output data; or the category identification and the recipient address occupy different areas in the data structure for the transaction output data.

In some embodiments of the present disclosure, when the first transaction data is transaction data for issuing the smart contract, the category identification indicates that the first transaction data is associated with the smart contract, the transaction amount is a first value greater than zero, the recipient address is an address of the smart contract, and the additional information includes codes of the smart contract. The managing module 420 storing the first transaction data into the blockchain via the consensus verification with other blockchain nodes, and storing the corresponding smart contract status into the local database for said each blockchain node based on the transaction output data includes: the managing module 420, configured to package the first transaction data into a new block and send the new block to other blockchain nodes, so that when adding the new block into the blockchain via the consensus verification, said each blockchain node initializes the smart contract based on the additional information and stores an initialized status into the local database for said each blockchain node.

In some embodiments of the present disclosure, when the first transaction data is transaction data for triggering the smart contract, the category identification indicates that the first transaction data is associated with the smart contract, the transaction amount is a second value, the recipient address is an address of the smart contract, and the additional information includes an executing instruction for the smart contract. The managing module 420 storing the first transaction data into the blockchain via the consensus verification with other blockchain nodes, and storing the corresponding smart contract status into the local database for said each blockchain node based on the transaction output data includes: the managing module 420, configured to package the first transaction data into a new block and send the new block to other blockchain nodes, so that when adding the new block into the blockchain via the consensus verification, said each blockchain node operates the smart contract based on the additional information and stores an operated status into the local database for said each blockchain node.

Specifically, as an optional embodiment, the managing module 420 may initialize the smart contract based on the additional information includes: the managing module 420 by initializing the smart contract by using a virtual machine based on codes of the smart contract; and/or the managing module 420 may operate the smart contract based on the additional information by operating the smart contract by using the virtual machine based on the executing instruction for the smart contract.

Fig. 5 schematically shows a block diagram of an apparatus for processing data for a blockchain according to some embodiments of the present disclosure.

As shown in Fig. 5, the apparatus 500 for processing data for a blockchain is applied to a blockchain node. The apparatus 500 includes a receiving module 410, a managing module 420, an initial changing module 430, and an auxiliary managing module 440.

The receiving module 410 and the managing module 420 have been described above, and repeated parts will not be described again.

The initial changing module 430 is configured to construct initial changing data after initializing and/or operating the smart contract based on the additional information. Transaction input data of the initial changing data is the transaction input data of the first transaction data, a recipient address of transaction output data of the initial changing data is an address of the client, and a transaction amount of the transaction output data of the initial changing data is an initial changing value. The initial changing value equals to actual transaction amount of the transaction input data minus the first value and/or the second value. The initial changing module 430 is further configured to send the initial changing data to other blockchain nodes, so that said each blockchain node stores the initial changing data into the blockchain via the consensus verification.

The auxiliary managing module 440 is configured to construct second transaction data after operating the smart contract based on the additional information. The second transaction data includes transaction input data and transaction output data. The transaction input data of the second transaction data is the transaction output data of the first transaction data. The second transaction data includes first transaction output data. A recipient address of the first transaction output data is an address of the node, and a transaction amount of the first transaction output data is a third value. The auxiliary managing module 440 is further configured to send the second transaction data to other blockchain nodes, so that said each blockchain node stores the second transaction data into the blockchain via the consensus verification.

Further, as an optional embodiment, the second transaction data further includes second transaction output data. A recipient address of the second transaction output data is an address indicated by a result of operating the smart contract, and a transaction amount of the second transaction output data is a fourth value. The fourth value represents an amount indicated by the result of operating the smart contract.

Further, as another optional embodiment, the second transaction data further includes third transaction output data. A recipient address of the second transaction output data is an address of the client, and a transaction amount of the second transaction output data is a fifth value. The fifth value equals to the second value minus the third value and the fourth value.

It should be noted that the implementation of the modules/units/subunits, etc., the technical problems solved, the functions achieved, and the technical effects achieved in embodiments of the apparatus are the same as or similar to the implementation of corresponding operations, the technical problems solved, the functions achieved, and the technical effects achieved, and will not be repeated here.

Functions of two or more of modules, sub-modules, units, and subunits according to the embodiments of the present disclosure, or at least a part thereof, may be implemented in one module. One or more of the modules, sub-modules, units, and sub-units according to the embodiments of the present disclosure may be split into a plurality of modules for implementation. One or more of the modules, sub-modules, units, and sub-units according to the embodiments of the present disclosure may be at least partially implemented as hardware circuits, such as field programmable gate array (FPGA), programmable logic array (PLA), system-on-chip, system-on-substrate, system-on-package, application specific integrated circuit (ASIC), or may be implemented by hardware or firmware in any other reasonable way that integrates or encapsulates the circuit, or by any one of the three implementation modes of software, hardware and firmware or in an appropriate combination of any of them. Alternatively, one or more of the modules, sub-modules, units, and sub-units according to the embodiments of the present disclosure may be at least partially implemented as a computer program module, and the computer program module, when operated, may implement corresponding functions.

For example, two or more of the receiving module 410, the managing module 420, the initial changing module 430, and the auxiliary managing module 440 may be combined into one module for implementation, or one of the receiving module 410, the managing module 420, the initial changing module 430, and the auxiliary managing module 440 may be split into a plurality of modules. Alternatively, at least part of the functions of the one or more modules may be combined with at least part of the functions of other modules and implemented in one module. According to some embodiments of the present disclosure, at least one of the receiving module 410, the managing module 420, the initial changing module 430, and the auxiliary managing module 440 may be at least partially implemented as a hardware circuit, such as field programmable gate array (FPGA), programmable logic array (PLA), system-on-chip, system-on-substrate, system-on-package, application specific integrated circuit (ASIC), or may be implemented by hardware or firmware in any other reasonable way that integrates or encapsulates the circuit, or by any one of the three implementation modes of software, hardware and firmware or in an appropriate combination of any of them. Alternatively, at least one of the receiving module 410, the managing module 420, the initial changing module 430, and the auxiliary managing module 440 may be at least partially implemented as a computer program module, and the computer program module, when operated, may implement corresponding functions.

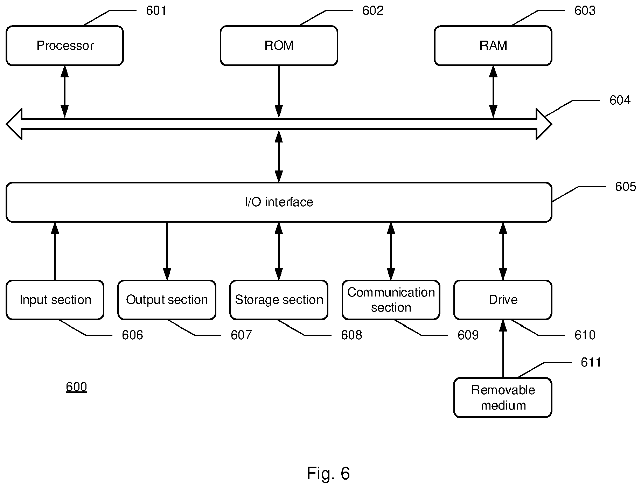

Fig. 6 schematically shows a block diagram of a computer device suitable for implementing the above-mentioned method according to some embodiments of the present disclosure. The computer device shown in Fig. 6 is only an example, and should not bring any limitation to the functions and application scope of the embodiments of the present disclosure.

As shown in Fig. 6, a computer device 600 according to some embodiments of the present disclosure includes a processor 601, the processor 601 may execute various appropriate actions and processing according to a program stored in a read-only memory (ROM) 602 or a program loaded from a storage section 608 to a random access memory (RAM) 603. The processor 601 may include, for example, a general-purpose microprocessor (e.g., a CPU), an instruction set processor and/or a related chipset and/or a special-purpose microprocessor (e.g., an application specific integrated circuit (ASIC)), etc. The processor 601 may further include on-board memory for caching purposes. The processor 601 may include a single processing unit for executing different actions of the method flow according to the embodiments of the present disclosure or a plurality of processing units.

In the RAM 603, various programs and data required for the operation of the device 600 are stored. The processor 601, the ROM 602, and the RAM 603 are connected to each other through a bus 604. The processor 601 executes various operations of the method flow according to the embodiments of the present disclosure by executing programs in the ROM 602 and/or RAM 603. It should be noted that the program may further be stored in one or more memories other than the ROM 602 and the RAM 603. The processor 601 may further execute various operations of the method flow according to the embodiments of the present disclosure by executing programs stored in the one or more memories.

According to some embodiments of the present disclosure, the device 600 may further include an input/output (I/O) interface 605, and the input/output (I/O) interface 605 is further connected to the bus 604. The device 600 may further include one or more of the following components connected to the I/O interface 605: an input section 606 including a keyboard, a mouse, etc.; an output section 607 including a cathode ray tube (CRT), a liquid crystal display (LCD), etc., and a speaker, etc.; a storage section 608 including a hard disk, etc.; and a communication section 609 including a network interface card such as a LAN card, a modem, etc. The communication section 609 implements communication processing via a network such as the Internet. The driver 610 is further connected to the I/O interface 605 as needed. A removable medium 611, such as a magnetic disk, an optical disk, a magneto-optical disk, a semiconductor memory, etc., is installed on the drive 610 as needed, so that the computer program read from the removable medium 611 is installed into the storage section 608 as needed.

According to the embodiments of the present disclosure, the method flow according to the embodiments of the present disclosure may be implemented as a computer software program. For example, some embodiments of the present disclosure include a computer program product, which includes a computer program carried on a computer-readable medium, and the computer program includes program code for executing the method shown in the flowchart. In such some embodiments, the computer program may be downloaded and installed from the network through the communication section 609, and/or installed from the removable medium 611. When the computer program is executed by the processor 601, the above functions defined in the system of the embodiments of the present disclosure are executed. According to the embodiments of the present disclosure, the systems, devices, apparatus, modules, units, etc. described above may be implemented by computer program modules.

The present disclosure further provides a computer-readable storage medium. The computer-readable storage medium may be included in the device/apparatus/system described in the above embodiments; or it may exist alone without being assembled into the device/apparatus/system. The above computer-readable medium carries one or more programs, and when the one or more programs are executed, it realizes: the method according to any of the embodiments of the present disclosure.

According to some embodiments of the present disclosure, the computer-readable storage medium may be an nonvolatile computer-readable storage medium, for example, but not limited to, portable computer disks, hard disks, random access memory (RAM), read-only memory (ROM), erasable programmable read-only memory (EPROM or flash memory), portable compact disk read-only memory (CD-ROM), optical storage device, magnetic storage device, or any suitable combination of the above. In the present disclosure, the computer-readable storage medium may be any tangible medium that includes or stores a program, and the program may be used by or in combination with an instruction execution system, device, or apparatus. For example, according to some embodiments of the present disclosure, the computer-readable storage medium may include ROM 602 and/or RAM 603 described above and/or one or more memories other than the ROM 602 and RAM 603.

The flowcharts and block diagrams in the accompanying drawings illustrate the possible architecture, functions, and operations of the system, method, and computer program product according to various embodiments of the present disclosure. In this regard, each block in the flowchart or block diagram may represent a module, program segment, or part of code, and the module, program segment, or part of code includes one or more executable instructions for realizing the specified logical function. It should further be noted that, in some alternative implementations, the functions marked in the block may further occur in a different order from the order marked in the drawings. For example, two blocks shown in succession may actually be executed substantially in parallel, and they may sometimes be executed in the reverse order, depending on the functions involved. It should further be noted that each block in the block diagram or flowchart, and the combination of blocks in the block diagram or flowchart, may be implemented by a dedicated hardware-based system that implements the specified functions or operations, or may be realized by a combination of dedicated hardware and computer instructions. Those skilled in the art may understand that the features described in the various embodiments and/or the claims of the present disclosure may be combined and/or integrated in various ways, even if such combinations or integrations are not explicitly described in the present disclosure. In particular, without departing from the spirit and teaching of the present disclosure, the features described in the various embodiments and/or the claims of the present disclosure may be combined and/or integrated in various ways. All these combinations and/or integrations fall within the scope of the present disclosure.

The embodiments of the present disclosure have been described above. However, these embodiments are only for illustrative purposes, and are not intended to limit the scope of the present disclosure. Although the embodiments are described respectively above, it does not mean that the measures in the respective embodiments cannot be advantageously used in combination. The scope of the present disclosure is defined by the appended claims and their equivalents. Without departing from the scope of the present disclosure, those skilled in the art may make various substitutions and modifications, and these substitutions and modifications should fall within the scope of the present disclosure.

## Claims

1. A method for processing data for a blockchain, the method is adapted to an unspent transaction output system of the blockchain and applied to a blockchain node, the method comprising:
receiving first transaction data sent by a client, wherein the first transaction data comprises transaction input data and transaction output data, wherein the transaction output data comprises: a category identification, a transaction amount, a recipient address and additional information, wherein the category identification is configured to indicate whether the first transaction data is associated with a smart contract, and the additional information is configured to indicate information required for operating the smart contract when the first transaction data is associated with the smart contract; and
when the first transaction data is associated with the smart contract, storing the first transaction data into the blockchain via consensus verification with other blockchain nodes, and storing a corresponding smart contract status into a local database for each blockchain node based on the transaction output data.

2. The method of claim 1, wherein:
when the first transaction data is transaction data for issuing the smart contract, the category identification indicates that the first transaction data is associated with the smart contract, the transaction amount is a first value greater than zero, the recipient address is an address of the smart contract, and the additional information comprises codes of the smart contract; and
storing the first transaction data into the blockchain via consensus verification with other blockchain nodes, and storing the corresponding smart contract status into the local database for said each blockchain node based on the transaction output data comprises:
packaging the first transaction data into a new block and sending the new block to other blockchain nodes, so that when adding the new block into the blockchain via consensus verification, said each blockchain node initializes the smart contract based on the additional information and stores an initialized status into the local database for said each blockchain node.

3. The method of claim 2, further comprising:
constructing initial changing data after initializing the smart contract based on the additional information, wherein transaction input data of the initial changing data is the transaction input data of the first transaction data, a recipient address of transaction output data of the initial changing data is an address of the client, and a transaction amount of the transaction output data of the initial changing data is an initial changing value, wherein the initial changing value equals to actual transaction amount of the transaction input data minus the first value; and
sending the initial changing data to other blockchain nodes, so that said each blockchain node stores the initial changing data into the blockchain via consensus verification.

4. The method of claim 1 or 2, wherein:
when the first transaction data is transaction data for triggering the smart contract, the category identification indicates that the first transaction data is associated with the smart contract, the transaction amount is a second value, the recipient address is an address of the smart contract, and the additional information comprises an executing instruction for the smart contract; and
storing the first transaction data into the blockchain via consensus verification with other blockchain nodes, and storing the corresponding smart contract status into the local database for said each blockchain node based on the transaction output data comprises:
packaging the first transaction data into a new block and sending the new block to other blockchain nodes, so that when adding the new block into the blockchain via consensus verification, said each blockchain node operates the smart contract based on the additional information and stores an operated status into the local database for said each blockchain node.

5. The method of claim 4, further comprising:
constructing second transaction data after operating the smart contract based on the additional information, wherein the second transaction data comprises transaction input data and transaction output data, wherein the transaction input data of the second transaction data is the transaction output data of the first transaction data, and the second transaction data comprises first transaction output data, wherein a recipient address of the first transaction output data is an address of the node, and a transaction amount of the first transaction output data is a third value; and
sending the second transaction data to other blockchain nodes, so that said each blockchain node stores the second transaction data into the blockchain via consensus verification.

6. The method of claim 5, wherein the second transaction data further comprises second transaction output data, wherein a recipient address of the second transaction output data is an address indicated by a result of operating the smart contract, and a transaction amount of the second transaction output data is a fourth value, wherein the fourth value represents an amount indicated by the result of operating the smart contract.

7. The method of claim 6, wherein the second transaction data further comprises third transaction output data, wherein a recipient address of the third transaction output data is an address of the client, and a transaction amount of the third transaction output data is a fifth value, wherein the fifth value equals to the second value minus the third value and the fourth value.

8. The method of claim 4, wherein:
initializing the smart contract based on the additional information comprises:
initializing the smart contract by using a virtual machine based on codes of the smart contract; and/or
operating the smart contract based on the additional information comprises:
operating the smart contract by using the virtual machine based on the executing instruction for the smart contract.

9. The method of claim 1, wherein:
the category identification and the recipient address occupy a same area in a data structure for the transaction output data; or
the category identification and the recipient address occupy different areas in the data structure for the transaction output data.

10. An apparatus for processing data for a blockchain, the apparatus is adapted to an unspent transaction output system of the blockchain and applied to a blockchain node, the apparatus comprising:
a receiving module, configured to receive first transaction data sent by a client, wherein the first transaction data comprises transaction input data and transaction output data, wherein the transaction output data comprises: a category identification, a transaction amount, a recipient address and additional information, wherein the category identification is configured to indicate whether the first transaction data is associated with a smart contract, and the additional information is configured to indicate information required for operating the smart contract when the first transaction data is associated with the smart contract; and
a managing module, configured to when the first transaction data is associated with the smart contract, store the first transaction data into the blockchain via consensus verification with other blockchain nodes, and store a corresponding smart contract status into a local database for each blockchain node based on the transaction output data.

11. The apparatus of claim 10, wherein:
when the first transaction data is transaction data for issuing the smart contract, the category identification indicates that the first transaction data is associated with the smart contract, the transaction amount is a first value greater than zero, the recipient address is an address of the smart contract, and the additional information comprises codes of the smart contract; and
the managing module is configured to store the first transaction data into the blockchain via consensus verification with other blockchain nodes, and store the corresponding smart contract status into the local database for said each blockchain node based on the transaction output data by:
packaging the first transaction data into a new block and sending the new block to other blockchain nodes, so that when adding the new block into the blockchain via consensus verification, said each blockchain node initializes the smart contract based on the additional information and stores an initialized status into the local database for said each blockchain node.

12. The apparatus of claim 11, further comprising:
an initial changing module, configured to construct initial changing data after initializing the smart contract based on the additional information, wherein transaction input data of the initial changing data is the transaction input data of the first transaction data, a recipient address of transaction output data of the initial changing data is an address of the client, and a transaction amount of the transaction output data of the initial changing data is an initial changing value, wherein the initial changing value equals to actual transaction amount of the transaction input data minus the first value; and send the initial changing data to other blockchain nodes, so that said each blockchain node stores the initial changing data into the blockchain via consensus verification.

13. The apparatus of claim 10 or 11, wherein:
when the first transaction data is transaction data for triggering the smart contract, the category identification indicates that the first transaction data is associated with the smart contract, the transaction amount is a second value, the recipient address is an address of the smart contract, and the additional information comprises an executing instruction for the smart contract; and
the managing module is configured to store the first transaction data into the blockchain via consensus verification with other blockchain nodes, and store the corresponding smart contract status into the local database for said each blockchain node based on the transaction output data by:
packaging the first transaction data into a new block and sending the new block to other blockchain nodes, so that when adding the new block into the blockchain via consensus verification, said each blockchain node operates the smart contract based on the additional information and stores an operated status into the local database for said each blockchain node.

14. The apparatus of claim 13, further comprising:
an auxiliary managing module, configured to construct second transaction data after operating the smart contract based on the additional information, wherein the second transaction data comprises transaction input data and transaction output data, wherein the transaction input data of the second transaction data is the transaction output data of the first transaction data, and the second transaction data comprises first transaction output data, wherein a recipient address of the first transaction output data is an address of the node, and a transaction amount of the first transaction output data is a third value; and send the second transaction data to other blockchain nodes, so that said each blockchain node stores the second transaction data into the blockchain via consensus verification.

15. The apparatus of claim 14, wherein the second transaction data further comprises second transaction output data, wherein a recipient address of the second transaction output data is an address indicated by a result of operating the smart contract, and a transaction amount of the second transaction output data is a fourth value, wherein the fourth value represents an amount indicated by the result of operating the smart contract.

16. The apparatus of claim 15, wherein the second transaction data further comprises third transaction output data, wherein a recipient address of the third transaction output data is an address of the client, and a transaction amount of the third transaction output data is a fifth value, wherein the fifth value equals to the second value minus the third value and the fourth value.

17. The apparatus of claim 13, wherein:
the managing module is configured to initialize the smart contract based on the additional information by: initializing the smart contract by using a virtual machine based on codes of the smart contract; and/or
the managing module is configured to operate the smart contract based on the additional information by: operating the smart contract by using the virtual machine based on the executing instruction for the smart contract.

18. The apparatus of claim 10, wherein:
the category identification and the recipient address occupy a same area in a data structure for the transaction output data; or
the category identification and the recipient address occupy different areas in the data structure for the transaction output data.

19. A computer device, comprising a memory, a processor, and a computer program stored on the memory and capable of running on the processor, and the processor, when executing the program, implements the method of any one of claims 1-9.

20. A computer readable storage medium having executable instructions stored thereon, and the instructions, when executed by a processor, cause the processor to implement the method of any one of claims 1-9.
